# EUROPÄISCHE PATENTANMELDUNG

(11) **EP 3 647 000 A1**
(43) Veröffentlichungstag der Anmeldung: **06.05.2020**
(21) Anmeldenummer: 19204839.5
(22) Anmeldetag: 23.10.2019
(51) Int. Cl.: B25J 15/06, B65G 47/91

(54) **SAUGGREIFER**

(30) Priorität: 25.10.2018 DE 102018126684
(71) Anmelder: J. Schmalz GmbH, 72293 Glatten (DE)
(72) Erfinder: Alexander, BOROWSKI, 78126 Königsfeld (DE); Daniel, BIENGER, 78737 Fluorn-Winzeln (DE); Fabian, SCHNEIDER, 72285 Pfalzgrafenweiler (DE); Stefanie, MERZ, 72290 Lossburg (DE)
(74) Vertreter: DREISS Patentanwälte PartG mbB

(57) **Zusammenfassung**

Die Erfindung betrifft einen Sauggreifer (10) mit einen Greifergrundkörper (12) mit einer Saugseite (14) und einer Vielzahl von Saugstellen (16), einen Unterdruckanschluss (18), und ein Unterdruckverteilersystem (28) mit Verteilerräumen (30) zur Verbindung der Saugstellen (16) mit dem wenigstens einen Unterdruckanschluss (18). Dabei ist der Greifergrundkörper (12) sandwichartig aufgebaut und hat eine Bodenplatte (20), eine Deckelplatte (24) und einen Profilkern (22), wobei der Profilkern (22) eine Vielzahl von Wandungsabschnitten (32) aufweist, welche sich derart zwischen Deckelplatte (24) und Bodenplatte (20) erstrecken, dass eine Vielzahl von Hohlräumen (34) in dem Greifergrundkörper (12) ausgebildet sind, und wobei die Verteilerräume (30) des Unterdruckverteilersystem (28) von wenigstens einer Teilmenge der Hohlräume (34) gebildet sind.

## Beschreibung

Die Erfindung betrifft einen Sauggreifer gemäß dem Oberbegriff des Anspruchs 1. Solche Sauggreifer weisen eine flächig ausgedehnte, meist ebene Saugfläche mit einer Vielzahl von Saugstellen auf. Diese Sauggreifer werden auch als Flächengreifer oder Flächensauggreifer (englisch: Large Area Vacuum Gripper) bezeichnet und finden z.B. zur Handhabung von großflächigen Objekten Verwendung. Außerdem werden Flächensauggreifer dazu eingesetzt, eine Mehrzahl von nebeneinander angeordneten Objekten gleichzeitig aufzunehmen und einer Handhabung zuzuführen. Die Objekte werden dann nebeneinander an der ausgedehnten Saugfläche angesaugt und so fixiert.

Die EP 1 052 201 B1 beschreibt einen Sauggreifkopf mit den Merkmalen des Oberbegriffs des Anspruchs 1. Der Sauggreifkopf hat eine Grundplatte mit Saugöffnungen, ein Vakuumverteilungssystem und einen Saugkasten, welcher auf der Grundplatte aufgebaut ist und das Unterdruckverteilersystem umgibt. Die WO 2014/114621 A1 zeigt einen Flächensauggreifer mit einem als Hohlprofil ausgebildeten Gehäuse, wobei ein Einschiebe-Bauteil in das Gehäuse einschiebbar und herausziehbar ist. Das Einschiebe-Bauteil stellt ein Unterdruckverteilersystem bereit.

Die bekannten Lösungen weisen eine gewisse bauliche Komplexität auf, was zu einem erhöhten Eigengewicht führt und eine gewisse Bauhöhe des Sauggreifers erforderlich macht. Insbesondere beim Einsatz zur Handhabung großflächiger und schwerer Gegenstände, z.B. ausgedehnte Metallteile, wie im Karosseriebau oder bei der Handhabung von Glasscheiben, oder bei der Handhabung von flächigen Packstücken, muss die Gehäusekonstruktion hohen Zugkräften senkrecht zur Saugfläche und Biegemomenten standhalten können. Dies stellt hohe Anforderungen an die Festigkeit der Gehäusekonstruktion und macht die Entwicklung von Greifern mit geringem Eigengewicht und geringer Bauhöhe schwierig.

Mit der vorliegenden Erfindung soll ein Flächensauggreifer mit hoher mechanischer Belastbarkeit, geringem Eigengewicht und geringer Bauhöhe bereitgestellt werden. Außerdem soll die Komplexität bei der Herstellung des Flächensauggreifers verringert werden.

Diese Aufgabe wird durch einen Sauggreifer gemäß Anspruch 1 gelöst. Hierbei handelt es sich um einen Flächensauggreifer zum Ansaugen und Fixieren von Gegenständen mittels Unterdruck. Der Sauggreifer umfasst einen Greifergrundkörper mit einer Saugseite, welche eine Vielzahl von Saugstellen aufweist. Die Saugstellen sind vorzugsweise regelmäßig an der Saugseite positioniert, beispielsweise matrixartig oder reihenweise angeordnet, so dass sich auch flächig ausgedehnte Gegenstände greifen lassen. Außerdem ist wenigstens ein Unterdruckanschluss zur Versorgung des Flächensauggreifer mit Unterdruck vorgesehen. Insofern wird der Flächensauggreifer dadurch betrieben, dass die Saugstellen mit Unterdruck beaufschlagt werden und an den Saugstellen eine Ansaugkraft ausgeübt werden kann. Der Flächensauggreifer umfasst außerdem ein Unterdruckverteilersystem mit einer Vielzahl von Verteilerräumen, welches die Saugstellen mit dem wenigstens einen Unterdruckanschluss strömungsmäßig verbindet.

Der Greifergrundkörper ist insbesondere sandwichartig aufgebaut und umfasst eine Bodenplatte, welche die Saugseite bereitstellt oder die Saugseite bildet, eine Deckelplatte sowie einen Profilkern. Der Profilkern ist vorzugsweise sandwichartig zwischen Bodenplatte und Deckelplatte angeordnet und dort fixiert. Der Profilkern ist insbesondere als zusammenhängende Baueinheit ausgestaltet und umfasst eine Vielzahl von Wandungsabschnitten, welche sich derart zwischen Deckelplatte und Bodenplatte erstrecken, dass eine Mehrzahl von Hohlräumen in den Greifergrundkörper ausgebildet sind. Dabei bilden zumindest einige der Hohlräume die sogenannten Verteilerräume des Unterdruckverteilsystems.

Insofern wird jeder der genannten Verteilerräume von einem der Hohlräume bereitgestellt. Dies schließt aber nicht aus, dass einige der Hohlräume nicht zum Unterdruckverteilersystem beitragen und beispielsweise für den pneumatischen Betrieb des Sauggreifers funktionslos sind. Denkbar ist aber auch, dass jeder der Hohlräume auch einen Verteilerraum des Unterdruckverteilersystems bildet. Insbesondere sind die Hohlräume zumindest teilweise von den Wandungsabschnitten selbst begrenzt, d.h. die Wandungsabschnitte stellen zumindest teilweise die Wände der Hohlräume dar. Die Hohlräume können aber auch teilweise von Deckelplatte und/oder Bodenplatte begrenzt sein, so dass ein Hohlraum durch Wandungsabschnitt sowie Deckelplatte und/oder Bodenplatte abgegrenzt ist.

Deckelplatte, Profilkern und Bodenplatte sind insbesondere sandwichartig miteinander verbunden. Durch diese Ausgestaltung als Sandwichstruktur mit dem innenliegenden Profilkern erhält der Greifergrundkörper eine hohe mechanische Steifigkeit und Festigkeit. Insofern stabilisiert der Profilkern bzw. die Wandungsabschnitte des Profilkerns die Gesamtstruktur. Insbesondere bildet der Profilkern (insbesondere seine Wandungsabschnitte) eine innere Stützstruktur des Greifergrundkörpers. Dadurch kann eine hohe Festigkeit gegen Zugkräfte erzielt werden, welche senkrecht auf Bodenplatte oder Deckelplatte wirken. Der Sauggreifer kann daher eine hohe Tragfähigkeit aufweisen.

Durch die Wandungsabschnitte sind zwischen Bodenplatte und Deckelplatte eine Mehrzahl von Raumbereichen voneinander abgetrennt, welche das Unterdruckverteilersystem bilden. Mit anderen Worten werden die im Profilkern ausgebildeten Hohlräume als integriertes Unterdruckverteilersystem genutzt. Zur Bereitstellung des Unterdruckverteilersystems sind daher keine zusätzlichen Bauteile erforderlich, so dass der Sauggreifer ein geringes Eigengewicht aufweisen kann. Bei einer Verwendung derartiger Sauggreifer in automatisierten Bearbeitungsanlagen müssen daher geringere Massen bewegt werden und es kann Energie eingespart werden.

Die z.B. sandwichartige Struktur des Gehäusegrundkörpers erlaubt eine vereinfachte Herstellung des Sauggreifers. Der sandwichartige Greifergrundkörper kann z.B. an der Bodenplatte mit Durchbrüchen für die Saugstelle und an der Deckelplatte mit Verteilerzugängen für den Unterdruckzugang versehen werden. Insbesondere ist es möglich, zunächst eine großflächige Sandwichstruktur herzustellen und aus dieser mehrere Greifergrundkörper der genannten Art herauszulösen. Die Struktur kann beispielsweise als Kunststoff-Bauteil hergestellt werden, in der Art eines durch die Innenstruktur des Profilkerns verstärkten Hohlprofils. Denkbar ist auch eine Herstellung als Strangpressprofil. Grundsätzlich ist möglich, dass mehrere, pneumatisch unabhängige Unterdruckanschlüsse vorgesehen sind. Insbesondere ist es denkbar, dass je eine Teilmenge der Saugstellen von einem separaten Unterdruckanschluss mit Unterdruck versorgt werden. Dies erlaubt eine Sektionierung der Saugfläche insofern, dass jeweils Gruppen von Saugstellen unabhängig voneinander aktiviert und deaktiviert werden können. Insofern können mehrere unabhängige Saugkreise in dem Greifergrundkörper bereitgestellt werden.

Die Saugstellen können beispielsweise als Saugöffnungen in der Saugseite ausgebildet sein. Denkbar ist auch, dass an der Saugseite ein zusätzlicher Belag (z.B. Dichtschaum) vorgesehen ist. Es ist auch denkbar, dass die Saugstellen jeweils mit separaten Saugköpfen (z.B. Elastomer-Sauger, Saugglocken, Faltenbalgsauger) oder sonstigen Sauggreifvorrichtungen besetzt sind.

Der Unterdruckanschluss bezeichnet den Übergang von einer Unterdruckversorgung zu dem Unterdruckverteilersystem des Flächensauggreifers. Dies bedeutet aber nicht, dass der Flächensauggreifer in seiner Gesamtheit zwingend an eine Unterdruckleitung angeschlossen sein muss. Vielmehr kann der Flächensauggreifer insgesamt an ein Druckluftsystem angeschlossen sein und zusätzlich druckluftbetriebene Unterdruckerzeuger (z.B. Ejektoren) umfassen. Zur weiteren Ausgestaltung können an der Deckelplatte eine oder mehrere Ejektoren positioniert und fixiert sein, wobei die Ejektoren den Unterdruckanschluss mit Unterdruck versorgen. Diese integrierte Bauweise ermöglicht es, den Sauggreifer kompakt auszugestalten.

Vorzugsweise bilden die Wandungsabschnitte eine räumlich regelmäßige, insbesondere eine sich periodisch wiederholende Struktur zwischen Bodenplatte und Deckelplatte. Dabei ist die Struktur vorzugsweise regelmäßig oder periodisch in einer Ebene betrachtet, welche sich parallel zur Deckelplatte und/oder Bodenplatte erstreckt. Vorzugsweise füllt die regelmäßige oder periodische Struktur den Zwischenraum zwischen Bodenplatte und Deckelplatte vollständig aus. Beispielsweise ist der Profilkern hierzu als Wabenplatte oder Wellplatte ausgebildet. Dadurch kann eine räumlich regelmäßige Stützstruktur bereitgestellt werden und eine hohe Festigkeit und Steifigkeit des Greifergrundgehäuses erzielt werden.

Vorzugsweise sind die Wandungsabschnitte monolithisch miteinander verbunden, so dass der Profilkern ein zusammenhängendes Bauteil darstellt und die Wandungsabschnitte Bestandteil einer sich zusammenhängenden Wandungsstruktur sind. Die Sandwichstruktur umfasst damit im Wesentlichen drei funktionale Einheiten, nämlich Bodenplatte, Profilkern und Deckelplatte, die jeweils zusammenhängende Bauteile darstellen. Dies schließt jedoch nicht aus, dass der Gehäusegrundkörper insgesamt als einstückiges und in sich zusammenhängendes Bauteil ausgebildet ist.

Zur weiteren Ausgestaltung weist der Profilkern auch Zwischen-Wandungen auf, welche sich parallel zu der Deckelplatte und/oder der Bodenplatte erstrecken. Insbesondere sind die Zwischen-Wandungen mit den sogenannten Wandungsabschnitten verbunden, insbesondere einstückig verbunden. Die Zwischen-Wandungen können sich z.B. zwischen benachbarten Wandungsabschnitten erstrecken. Die Zwischen-Wandungen können beispielsweise den Profilkern in Richtung zur Deckelplatte und/oder in Richtung zur Bodenplatte abschließen. Dies erlaubt eine stabile Fixierung der verschiedenen Bauteile aneinander und führt zu einer hohen Festigkeit gegenüber Zugkräften senkrecht zur Fläche von Bodenplatte und/oder Deckelplatte. Es kann jedoch auch vorteilhaft sein, wenn Zwischen-Wandungen im Profilkern derart verlaufen, dass die sowohl von Deckelplatte, als auch von Bodenplatte jeweils beabstandet sind. Vorzugsweise verläuft die Zwischen-Wandung mittig zwischen Bodenplatte und Deckelplatte. Dadurch werden Hohlräume bereitgestellt, welche sich nicht über die gesamte Bauhöhe des Greifergrundteils erstrecken und somit ein verringertes Volumen aufweisen. Solche Hohlräume können vorteilhaft sein, um ein Unterdruckverteilersystem mit bestimmten pneumatischen Eigenschaften bereitzustellen (z.B. kurze Evakuierungszeiten).

Grundsätzlich ist es vorteilhaft, wenn sich Deckelplatte und Bodenplatte parallel zueinander erstrecken. Deckelplatte und/oder Bodenplatte sind vorzugsweise eben ausgebildet. Dadurch kann der Greifergrundkörper in seiner Gesamtheit in der Art einer ebenen, flachen Platte ausgebildet sein. Denkbar ist aber auch, dass Deckel- und Bodenplatte einen welligen oder profilierten Verlauf aufweisen (uneben) und der Greifergrundkörper insgesamt einen gewellten oder profilierten Verlauf aufweist.

Vorzugsweise überdecken Deckelplatte und Bodenplatte bei Betrachtung entlang einer Flächennormalen auf die Deckelplatte und/oder Bodenplatte jeweils identische Flächenbereiche und weisen insofern eine gleich große Querschnittsfläche auf. Deckelplatte und Bodenplatte sind vorzugsweise miteinander fluchtend übereinander angeordnet. Insbesondere erstreckt sich der Profilkern ebenfalls über den gesamten Flächenbereich, welcher von Deckelplatte und Bodenplatte überdeckt ist. Dadurch haben alle Lagen des sandwichartigen Aufbaus im Wesentlichen dieselbe flächenmäßige Ausdehnung und es kann ein stabiles sandwichartiges Verbundteil erzeugt werden.

Eine vorteilhafte Ausgestaltung besteht darin, dass der Profilkern in seiner Gesamtheit plattenartig ausgebildet ist und eine Mehrzahl von verschiedenen Bereichen aufweist, welche auf wenigstens zwei unterschiedlichen Höhenniveaus liegen (bezüglich einer gedachten Bezugsebene der plattenartigen Ausdehnung des Profilkerns). Dabei erstrecken sich die Wandungsabschnitte, welche die unterschiedlichen Hohlräume voneinander trennen, vorzugsweise zwischen den Bereichen unterschiedlichen Niveaus. Insofern kann der Profilkern als Wellenplatte oder Knickplatte, beispielsweise wellblechartig, ausgebildet sein. Dies ermöglicht es, den Profilkern als zusammenhängendes Bauteil herzustellen.

Zumindest einige der Wandungsabschnitte, oder sämtliche Wandungsabschnitte, können entlang ihrer Erstreckung zwischen Bodenplatte und Deckelplatte einen Knick und/oder eine Welle aufweisen. Diese Ausgestaltung kann die mechanische Stabilität der Gesamtkonstruktion erhöhen. Außerdem kann der Profilkern als eigenstabiles Bauteil gefertigt werden und verarbeitet werden.

Eine einfache und gegen Zugkräfte stabile Konfiguration kann sich jedoch auch dadurch ergeben, dass zumindest einige oder alle Wandungsabschnitte gerade und insbesondere eben verlaufen.

Vorzugsweise verlaufen zumindest einige oder alle Wandungsabschnitte des Profilkerns schräg zur Deckelplatte und/oder zur Bodenplatte. Dadurch kann die mechanische Stabilität erhöht werden und es können Hohlräume mit bestimmten, vorteilhaften Geometrien erzeugt werden.

Ein einfacher Aufbau des Greifergrundkörpers ergibt sich jedoch auch dadurch, die Wandungsabschnitte (zumindest einige oder auch alle Wandungsabschnitte) senkrecht zur Deckelplatte und/oder zur Bodenplatte verlaufen.

Bei einer vorteilhaften Ausgestaltung verlaufen zumindest einige der Wandungsabschnitte paarweise geneigt zueinander. Dadurch ergibt sich eine besonders hohe Stabilität des Profilkerns gegenüber Scherkräften. Vorzugsweise sind einige der Wandungsabschnitte bezüglich einer Flächennormalen der Deckelplatte und/oder der Bodenplatte zueinander entgegengesetzt geneigt. Insofern können einige Wandungsabschnitte jeweils paarweise aufeinander zu und/oder voneinander weg verlaufen (z.B. entlang des Verlaufs von der Bodenplatte zur Deckelplatte betrachtet). Insgesamt kann es vorteilhaft sein, wenn die Wandungsabschnitte in einer Schnittebene senkrecht zur Deckelplatte und/oder Bodenplatte betrachtet eine Fachwerkstruktur bilden.

In Draufsicht, also bei Betrachtung entlang der Flächennormalen auf Deckelplatte und/oder Bodenplatte, bilden die Wandungsabschnitte nach einer vorteilhaften Ausgestaltung eine Wabenstruktur. Die Wabenstruktur weist Waben auf, welche die Hohlräume bilden. Insofern verlaufen die Wandungsabschnitte derart, dass entlang der Flächennormalen betrachtet geschlossene Waben gebildet sind. Einer solchen Wabe können dann jeweils eine Saugstelle oder jeweils auch mehrere Saugstellen zugeordnet sein.

Denkbar ist, dass die Wandungsabschnitte derart verlaufen, dass sich die Querschnittsfläche der Wabe entlang der Ausdehnung der Wabe zwischen Bodenplatte und Deckelplatte verändert. Denkbar ist auch, dass sich die Querschnittsfläche entlang der Ausdehnung der Wabe von der Bodenplatte zur Deckelplatte zunächst verringert und dann wieder vergrößert. Auch die umgekehrte Ausgestaltung kann vorteilhaft sein, wobei sich die Querschnittsfläche der Wabe zunächst vergrößert und dann wieder verringert. Die Waben weisen vorzugsweise einen polygonalen Querschnitt auf, so dass die von dem Profilkern überdeckte Fläche lückenlos mit Waben ausgefüllt werden kann. Dies kann beispielsweise durch eine pyramidale Form der Waben realisiert werden. Für bestimmte Ausgestaltungen können auch runde Querschnittsflächen vorteilhaft sein.

Es kann auch vorteilhaft sein, wenn die Waben entlang der Ausdehnung der Wabe von der Bodenplatte zur Deckelplatte eine konstante Querschnittsfläche aufweisen. Die so gebildeten Hohlräume sind dann vorzugsweise sämtlich zueinander identisch geformt.

Eine vorteilhafte Ausgestaltung ergibt sich auch dadurch, dass die Wandungsabschnitte derart verlaufen, dass zumindest einige der Hohlräume als langgestreckte Kanäle ausgebildet sind, welche parallel zu der Bodenplatte und/oder zu der Deckelplatte verlaufen. Vorzugsweise erstrecken sich die Kanäle über den gesamten Flächenbereich, welcher von dem Profilkern überdeckt wird, also insbesondere über die gesamte Ausdehnung der Saugseite. In solchen Kanälen können jeweils eine Mehrzahl von Saugstellen angeordnet sein, so dass die Saugstellen durch den jeweils zugeordneten Kanal mit Unterdruck versorgt werden können. Zur weiteren Ausgestaltung verlaufen die Kanäle parallel zueinander. Denkbar ist auch, dass die Kanäle eine Art Gitternetz an der Saugseite bilden.

Nach einem grundsätzlichen Aspekt verlaufen die Wandungsabschnitte vorzugsweise derart, dass zumindest einige der Hohlräume paarweise gegeneinander abgedichtet sind. Die gegeneinander abgedichteten Hohlräume sind insbesondere diejenigen, welche die Verteilerräume bereitstellen.

Der Aufbau des Greifergrundkörpers erlaubt es in vorteilhafter Weise, die Saugstellen an der Saugseite zu funktional unabhängigen Gruppen zusammenzufassen. Hierbei können beispielsweise jedem Verteilerraum mehrere Saugstellen zugeordnet sein, welche über den jeweiligen Verteilerraum mit dem Unterdruckanschluss strömungsverbunden sind. Dadurch können Saugstellen, welche jeweils verschiedenen Verteilerräumen zugeordnet sind, unabhängig voneinander mit Unterdruck beaufschlagt werden. Insofern können mehrere unabhängige Saugkreise gebildet werden. Diese Sektionierung erlaubt es z.B. eine Mehrzahl von nebeneinander angeordneten Objekten gleichzeitig nebeneinander an der ausgedehnten Saugfläche anzusaugen und ggf. unabhängig voneinander loszulassen.

Insbesondere kann vorgesehen sein, dass mehrere separate Unterdruckanschlüsse vorgesehen sind und wenigstens zwei Verteilerräume zwei unterschiedlichen Unterdruckanschlüssen zugeordnet sind (d.h. das die Unterdruckversorgung der zwei Verteilerräume mittels verschiedener Unterdruckanschlüsse erfolgt). Dies ermöglicht es, die jeweils zugeordneten Saugstellen verschiedener Verteilerräume unabhängig voneinander mit Unterdruck zu beaufschlagen. Dadurch können die Saugstellen zu Gruppen von Saugstellen zusammengefasst werden, so dass die Saugstellen-Gruppen unabhängig voneinander betrieben werden können. Dies ermöglicht es, nicht benötigte Saugstellen zu deaktivieren, beispielsweise wenn Gegenstände gegriffen werden sollen, welche die Saugseite nicht vollständig überdecken.

Eine vorteilhafte Ausgestaltung kann aber auch darin bestehen, dass jedem Verteilerraum nur eine Saugstelle oder nur eine geringe Anzahl von Saugstellen (z.B. zwei bis acht Saugstellen) zugeordnet sind. Wenn dann für jeden Verteilerraum verschiedene Unterdruckanschlüsse zur Verfügung stehen, so können die einzelnen Saugstellen unabhängig voneinander angesteuert werden.

Zur weiteren Ausgestaltung weist die Deckelplatte für jeden Verteilerraum oder für je eine Gruppe von Verteilerräumen einen Verteilerzugang auf. Der Verteilerzugang kann als Durchbruch oder Bohrung durch die Deckelplatte hindurch in den jeweiligen Verteilerraum einmünden. Insbesondere fluchtet der Verteilerzugang mit dem jeweiligen Verteilerraum bezüglich der Flächennormalen der Deckelplatte. Somit können die Anschlüsse für die einzelnen Verteilerräume auf einfache Weise von oben durch die Deckelplatte hindurch erfolgen. Dadurch kann beispielsweise für jeden Verteilerraum auf einfache Weise ein Steuerventil vorgesehen sein, welches ebenfalls an der Deckelplatte, insbesondere oberhalb des jeweiligen Verteilerraums, angeordnet ist.

Die Wandungsabschnitte verlaufen vorzugsweise derart, dass der Profilkern spiegelsymmetrisch bezüglich einer Mittelebene zwischen Bodenplatte und Deckelplatte ausgebildet ist. Denkbar ist auch, dass der Profilkern symmetrisch bezüglich einer Rotation um 180° um eine in der Mittelebene verlaufenden Achse ausgebildet ist, d.h. dass der Profilkern nach Drehung um 180° diese Achse gleich erscheint. Denkbar ist auch, dass die Struktur des Profilkerns achssymmetrisch bezüglich einer Symmetrieachse ist, welche im Profilkern zwischen Bodenplatte und Deckelplatte verläuft, insbesondere parallel zur Bodenplatte und Deckelplatte verläuft. Diese Ausgestaltung ermöglicht eine einfache Herstellung als Sandwich-Profil und eine vereinfachte weitere Verarbeitung des Greifergrundkörpers, da lediglich Durchbrüche für Saugstellen und Verteilerzugänge erzeugt werden müssen, und Oberseite und Unterseite des Greifergrundkörpers erst später festgelegt werden können.

Nach einem vorteilhaften Aspekt der Erfindung ist der Greifergrundkörper monolithisch ausgebildet. Insofern sind insbesondere Deckelplatte, Profilkern und Bodenplatte einstückig miteinander verbunden, beispielsweise stoffschlüssig miteinander verbunden.

Deckelplatte, Profilkern und Bodenplatte können insbesondere aus demselben Material erzeugt sein. Denkbar hierfür sind beispielsweise Kunststoff, Faserverbundwerkstoffe, Carbon, Aluminium, Pappe usw. Es kann jedoch auch vorteilhaft sein, wenn der Greifergrundkörper als Verbundbauteil ausgebildet ist, wobei zumindest eines der Bauteile Bodenplatte, Deckelplatte und Profilkern aus einem Material erzeugt ist, welches von dem Material der anderen Bauteile abweicht. Dadurch kann der Sauggreifer bedarfsgerecht hinsichtlich Gewicht und Festigkeit ausgelegt werden.

Zur weiteren Ausgestaltung können einige der Hohlräume mit einem Füllmaterial ausgefüllt sein, welches von dem Material der Wandungsabschnitte abweicht. Das Füllmaterial ist insbesondere porös ausgestaltet, beispielsweise als Schaumstoff ausgebildet. Vorzugsweise ist Füllmaterial gerade in jenen Hohlräumen vorgesehen, welche nicht als Verteilerräume wirken. Dadurch kann die mechanische Stabilität erhöht werden, ohne dass dies mit einer signifikanten Gewichtserhöhung verbunden ist.

Die Erfindung wird im Folgenden anhand der Figuren näher erläutert.

Es zeigen:
Figur 1: Eine Gesamtansicht eines Flächensauggreifers;
Figur 2: Ausschnitt aus einem Längsschnitt mit Schnittebene A-A in Figur 1;
Figur 3: Darstellung eines Schnitts durch den Greifergrundkörper einer ersten Ausgestaltungsmöglichkeit;
Figur 4: Schnittdarstellung durch den Greifergrundkörper in einer weiteren Ausgestaltungsmöglichkeit;
Figuren 5
   bis 7: Schnittdarstellungen durch Greifergrundkörper zur Erläuterung weiterer Ausgestaltungsmöglichkeiten;
Figuren 8
   bis 10: Draufsichten auf Profilkerne in skizzierter Darstellung zur Erläuterung weiterer Ausgestaltungsmöglichkeiten;

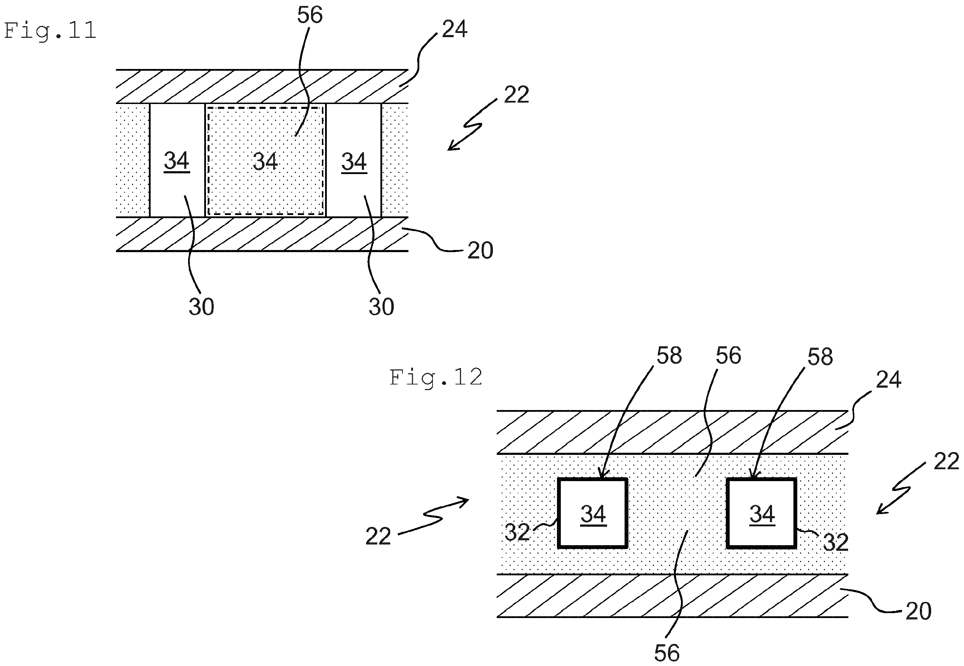

Figur 11: Skizzierte Darstellung eines Schnitts durch einen Greifergrundkörper zur Erläuterung einer Ausgestaltung mit Füllmaterial; und
Figur 12: Skizzierte Darstellung eines Schnitts durch einen Greifergrundkörper gemäß einer weiteren Ausgestaltungsmöglichkeit.

In der nachfolgenden Beschreibung sowie in den Figuren sind für identische oder einander entsprechende Merkmale jeweils dieselben Bezugszeichen verwendet.

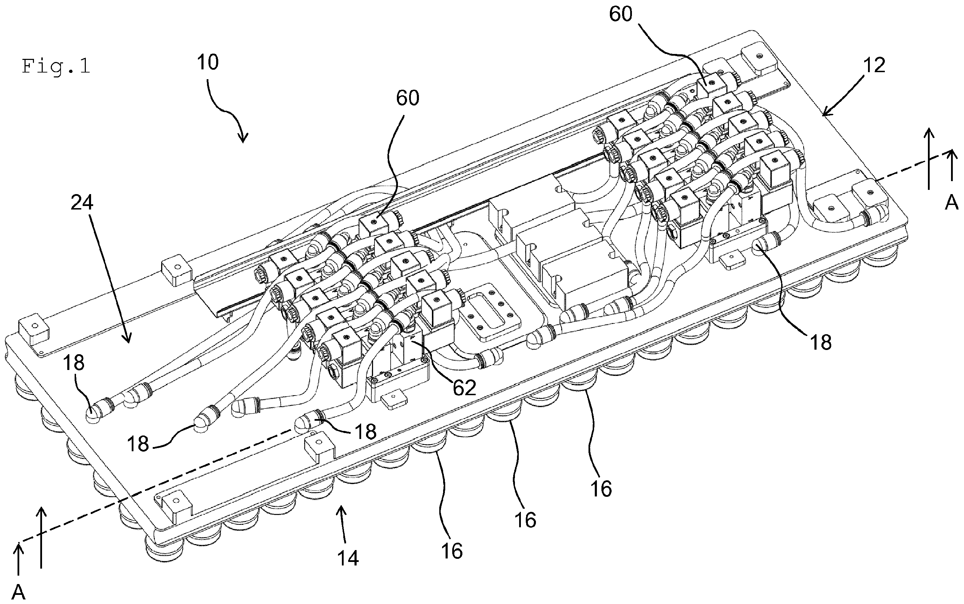

Die Figur 1 zeigt einen in seiner Gesamtheit mit dem Bezugszeichen 10 bezeichneten Sauggreifer (Flächensauggreifer) in perspektivischer Darstellung. Der Sauggreifer 10 hat einen insgesamt plattenartigen Greifergrundkörper 12, dessen Unterseite eine Saugseite 14 bildet, an welcher eine Vielzahl von matrixartig angeordneten Saugstellen 16 vorgesehen sind. Die Saugstellen 16 sind im dargestellten Beispiel als Elastomer-Sauger, insbesondere Faltenbalgsauger, ausgebildet. Der Greifergrundkörper weist außerdem mehrere Unterdruckanschlüsse 18 auf.

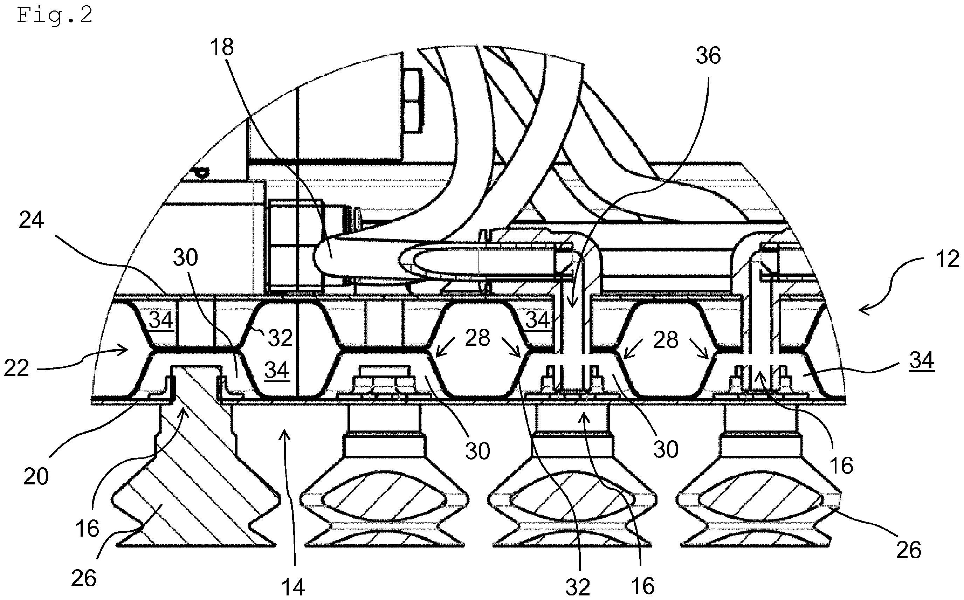

Die Figur 2 zeigt eine Detailansicht eines Längsschnittes durch den Greifergrundkörper 12 entlang der Linie A-A in Figur 1 mit einer Schnittebene, die sich senkrecht zu der Saugseite 14 erstreckt. Der Greifergrundkörper 12 weist demnach eine sandwichartige Struktur auf und umfasst eine Bodenplatte 20, einen an der Bodenplatten 20 anliegenden Profilkern 22 sowie eine an dem Profilkern anliegende Deckelplatte 24. Die Saugstellen 16 sind an der Bodenplatte 20 vorgesehen, so dass die Bodenplatte 20 insgesamt die Saugseite 14 des nächsten Sauggreifers 10 bereitstellt. An der Deckelplatte 24 sind die Unterdruckanschlüsse 18 vorgesehen. Jeder Saugstelle 16 ist im dargestellten Beispiel ein Faltenbalgsauger 26 zugeordnet.

Der Sauggreifer 10 weist ein in Gesamtheit als Unterdruckverteilersystem 28 bezeichnetes System aus Verteilerräumen 30 im Innern des Greifergrundkörpers 12 auf. Die Verteilerräume 30 werden dadurch gebildet, dass der Profilkern 22 eine Vielzahl von Wandungsabschnitten 32 aufweist, welche sich zwischen Bodenplatte 20 und Deckelplatte 24 erstrecken. Dadurch werden in dem Greifergrundkörper 20 eine Vielzahl von Hohlräumen 34 abgetrennt. Im dargestellten Beispiel wirken einige der Hohlräume 34 jeweils als Verteilerräume 30 des Unterdruckverteilersystems 28.

Wie Figur 2 erkennbar, ist ein als Verteilerraum 30 wirkender Hohlraum 34 von Seiten der Deckelplatte 24 her mit einem Verteilerzugang 36 verbunden, welcher wiederum mit einem entsprechenden Unterdruckanschluss 18 strömungsverbunden ist.

In einem Verteilerraum 30 können grundsätzlich mehrere Saugstellen 16 einmünden, so dass sie über den Verteilerraum 30, den zugehörigen Verteilerzugang 36 und den entsprechenden Unterdruckanschluss 18 mit Unterdruck beaufschlagbar sind.

Insofern bilden die Wandungsabschnitte 32 des Profilkerns 22 gemeinsam mit Bodenplatte 20 und Deckelplatte 24 eine Vielzahl von Hohlräumen 34 aus, wobei einige der Hohlräume 34 als Verteilerräume 30 wirken. Hierbei können verschiedene Ausgestaltungen für den Profilkern 22 vorteilhaft sein.

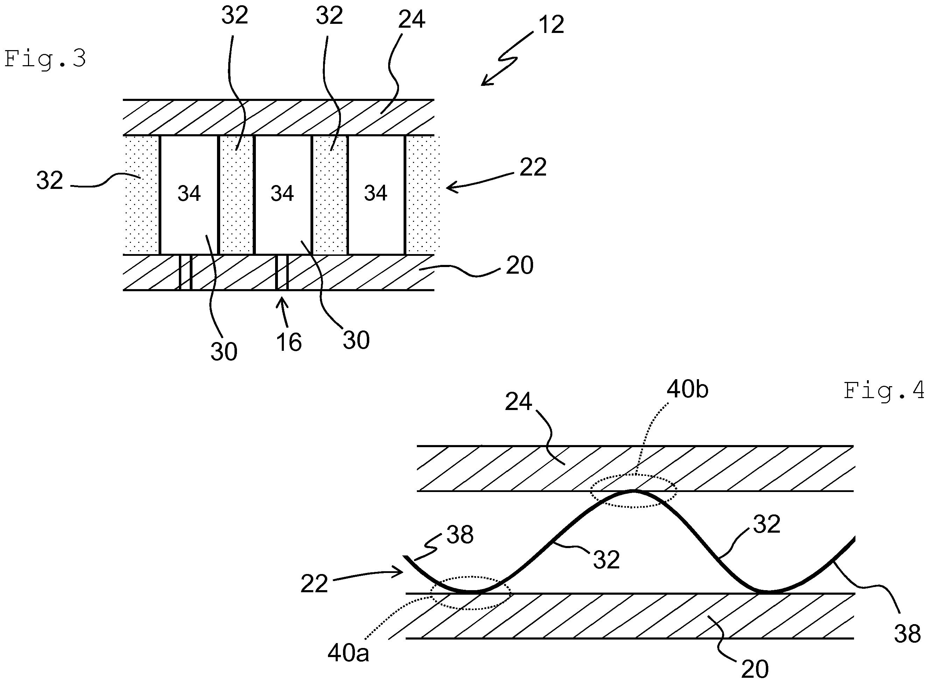

In den Figuren 3 bis 6 sind in skizzierter Darstellung jeweils Ausschnitte aus einem Greifergrundkörper 12 gezeigt, beispielsweise in einer Schnittdarstellung entsprechend der Figur 2.

Vorzugsweise bilden die Wandungsabschnitte eine räumlich regelmäßige und sich periodisch wiederholende Struktur, insbesondere bei Betrachtung in einem Längsschnitt senkrecht zur Bodenplatte 20 oder Deckelplatte 24 (vgl. Figuren 3 bis 6).

Die Wandungsabschnitte 32 können dabei beispielsweise eben verlaufen und sich im Wesentlichen senkrecht zwischen Bodenplatte 20 und Deckelplatte 24 erstrecken (vgl. Figur 3). Dadurch werden eine Reihe von Hohlräumen 34 gebildet, die je nach Verlauf der Wandungsabschnitte 32 zylindrisch mit polygonaler Grundfläche ausgestaltet sein können.

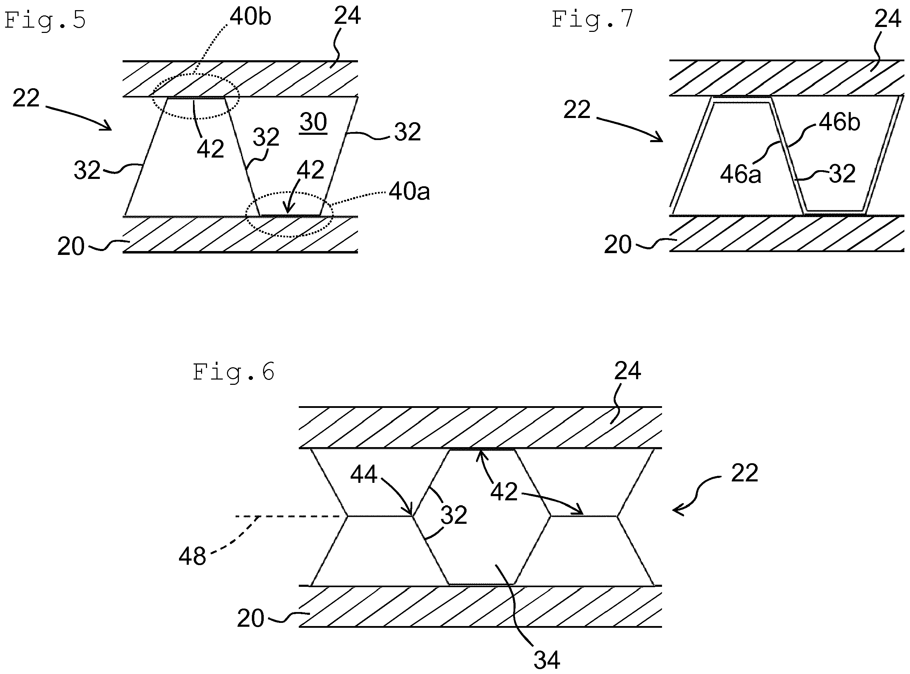

Der Profilkern 22 kann auch eine im Wesentlichen durchgehende und zusammenhängende Wand 38 aufweisen, und beispielsweise gewellt zwischen Deckelplatte 24 und Bodenplatte 20 verlaufen (vgl. Figur 4). Dies ist eine beispielhafte Realisierung dafür, dass der Profilkern als ganzes plattenartig ausgebildet ist und ein Wandgebilde aufweist, welches eine Mehrzahl von Bereichen auf unterschiedlichen Höhenniveaus 40a, 40b hat (vgl. Figur 4). Hierfür ist die Wellenstruktur nicht zwingend (vgl. z.B. Figur 5 mit Wandungsabschnitten 32, welche einen wellenfreien Verlauf aufweist).

Die Wandungsabschnitte 32 können schräg zur Deckelplatte 24 und/oder Bodenplatte 20 verlaufen (vgl. Figuren 5 bis 7). Der Profilkern 22 kann zusätzlich zu den Wandungsabschnitten 32, welche sich zwischen Bodenplatte 20 und Deckelplatte 24 erstrecken, auch Zwischen-Wandungen 42 aufweisen, welche im Wesentlichen parallel zu Bodenplatte 20 und/oder Deckelplatte 24 verlaufen (siehe z.B. Figuren 5 und 6). Die Zwischen-Wandungen 42 können aber auch schräg verlaufen. Grundsätzlich kann der Wandungsabschnitt 32 auch derart zwischen Bodenplatte 20 und Deckelplatte 24 verlaufen, dass ein Knick 44 oder eine Welle ausgebildet wird (vgl. Figur 6). Dies ermöglicht es, verschiedenartige Geometrien für die Hohlräume 34 und damit die Verteilerräume 30 zu realisieren.

Der Profilkern 22 kann beispielsweise dadurch realisiert werden, dass zwei oder mehr komplementär ineinander passende Formplatten 46a, 46b zusammengefügt werden (vgl. Figur 7). Dadurch kann eine hohe mechanische Festigkeit erzielt werden. Insofern sind die Wandungsabschnitte 32 dann als Doppelwandungen bzw. Mehrfachwandungen ausgebildet.

Grundsätzlich kann der Profilkern 22 spiegelsymmetrisch bezüglich einer Mittelebene 48 zwischen Bodenplatte 20 und Deckelplatte 24 ausgebildet sein (siehe beispielsweise Figur 6).

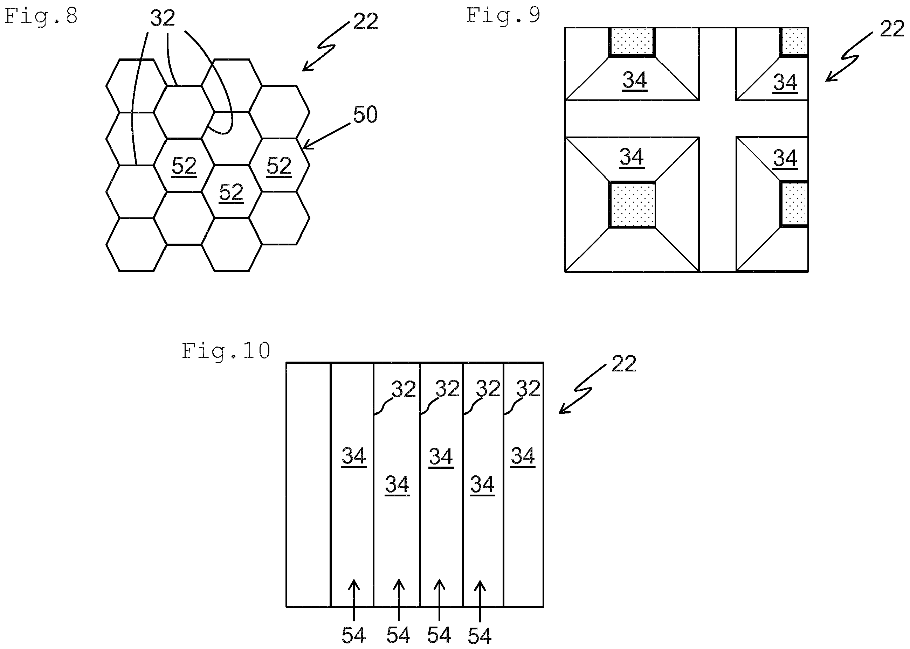

In den Figuren 8 bis 10 sind skizzierte Darstellungen einer Draufsicht auf den Profilkern 22 bzw. auf die von den Wandungsabschnitten 32 gebildete Struktur gezeigt. Die Draufsicht ist dabei eine Ansicht entlang einer Flächennormalen auf Bodenplatte und/oder Deckelplatte 24. Die Wandungsabschnitte 32 können derart verlaufen, dass eine Wabenstruktur 50 mit einer Vielzahl von Waben 52 ausgebildet wird (vgl. Figur 8). Die Saugstellen 16 können derart an der Bodenplatte 20 positioniert sein, dass einer Wabe 52 eine oder mehrere Saugstellen zugeordnet sind. Die Wabenstruktur 50 weist vorzugsweise polygonale Waben 52 auf (vgl. Figur 8).

In Figur 9 ist ein Profilkern 22 in Draufsicht gezeigt, welcher pyramidale Hohlräume 34 aufweist. Ein solcher Profilkern 22 kann beispielsweise durch die Ausgestaltung gemäß Figur 5 erzielt werden, wenn die Wandungen 32 des Profilkerns 22 in der Art von gekappten Pyramiden mit quadratischer Grundfläche ausgestaltet sind. Insofern weist der Profilkern 22 gemäß Figur 9 Waben mit quadratischer Grundfläche auf, wobei sich der Querschnitt einer jeden Wabe entlang des Verlaufes von der Bodenplatte 20 zur Deckelplatte 24 verändert.

Die Wandungsabschnitte 32 des Profilkerns 22 können jedoch auch so ausgebildet sein, dass die Hohlräume 34 als Kanäle 54 ausgebildet sind, welche sich in den Profilkern 22 parallel zur Bodenplatte 20 und/oder Deckelplatte 24 erstrecken (siehe Figur 10). Ein solcher Profilkern kann beispielsweise mit der Ausgestaltung gemäß Figur 5 realisiert werden, wenn sich die Wandungsabschnitte 32 entlang der Saugseite 14 erstrecken und nicht zu pyramidalen Strukturen geschlossen sind.

Einige der Hohlräume 34 können mit einem vorzugsweise porösen Füllmaterial 56 ausgefüllt sein (vgl. Figur 11). Vorzugsweise sind diejenigen Hohlräume 34 mit dem Füllmaterial 56 ausgefüllt, welche nicht als Verteilerräume 30 wirken.

Eine Ausfüllung bestimmter Bereiche des Profilkerns 22 mit Füllmaterial 56 ermöglicht es außerdem, in dem Profilkern 22 Hohlräume 34 zu erzeugen, welche nicht durch Wandungsabschnitte mit Bodenplatte 20 und/oder Deckelplatte 24 verbunden sind (vgl. Figur 12). Hierzu kann beispielsweise ein rohrartiger Einleger 58 in dem Füllmaterial 56 aufgenommen sein. Der Innenraum des Einlegers 58 bildet dann einen der genannten Hohlräume 34. Die Wandungen des rohrartigen Einlegers 56 bilden insofern Wandungsabschnitte 32 (vgl. Figur 12).

Die sandwichartige Ausgestaltung des Greifergrundkörpers 12 ermöglicht es, an der Deckelplatte 24 zusätzlich zu den Unterdruckanschlüssen 18 auch weitere, funktionale Einheiten des Sauggreifers 10 anzuordnen. Beispielsweise können an der Deckelplatte 24 druckluftbetriebene Unterdruckerzeuger 60 und/oder Ventileinrichtungen 62 montiert sein, wobei der Gesamtaufbau kompakt und übersichtlich ist (vgl. Figur 1).

## Patentansprüche

1. Sauggreifer (10) zum Ansaugen von Gegenständen mittels Unterdruck, umfassend:
- einen Greifergrundkörper (12) mit einer Saugseite (14), welche eine Vielzahl von Saugstellen (16) aufweist;
- wenigstens einen Unterdruckanschluss (18) zum Betreiben des Sauggreifers (10) mittels Unterdruck;
- ein Unterdruckverteilersystem (28) mit Verteilerräumen (30) zur Verbindung der Saugstellen (16) mit dem wenigstens einen Unterdruckanschluss (18),
**dadurch gekennzeichnet, dass** der Greifergrundkörper (12) eine die Saugseite (14) bereitstellende Bodenplatte (20), eine Deckelplatte (24) und einen Profilkern (22) aufweist, wobei der Profilkern (22) zwischen Bodenplatte (20) und Deckelplatte (24) fixiert ist,
wobei der Profilkern (22) eine Vielzahl von insbesondere einstückig miteinander verbundenen Wandungsabschnitten (32) aufweist, welche sich derart zwischen Deckelplatte (24) und Bodenplatte (20) erstrecken, dass eine Vielzahl von Hohlräumen (34) in dem Greifergrundkörper (12) ausgebildet sind,
und wobei die Verteilerräume (30) des Unterdruckverteilersystem (28) von wenigstens einer Teilmenge der Hohlräume (34) gebildet sind.

2. Sauggreifer (10) nach Anspruch 1, wobei die Wandungsabschnitte (32) eine räumlich regelmäßige, insbesondere sich periodisch wiederholende, Struktur zwischen Bodenplatte (20) und Deckelplatte (24) bilden.

3. Sauggreifer (10) nach einem der vorherigen Ansprüche, wobei der Profilkern (22) Zwischen-Wandungen (42) aufweist, welche parallel zu der Deckelplatte (24) und/oder Bodenplatte (20) verlaufen.

4. Sauggreifer (10) nach einem der vorherigen Ansprüche, wobei die Deckelplatte (24) und die Bodenplatte (20) in Draufsicht entlang einer Flächennormalen auf die Deckelplatte und/oder Bodenplatte jeweils identische Flächenbereiche überdecken und sich der Profilkern (22) über den gesamten überdeckten Flächenbereich erstreckt.

5. Sauggreifer (10) nach einem der vorherigen Ansprüche, wobei der Profilkern (22) plattenartig ausgebildet ist und eine Mehrzahl von Bereichen auf wenigstens zwei unterschiedlichen Höhenniveaus (40a, 40b) aufweist, wobei sich die Wandungsabschnitte (32) zwischen den Bereichen unterschiedlichen Höhenniveaus (40a, 40b) erstrecken.

6. Sauggreifer (10) nach einem der vorherigen Ansprüche, wobei der Wandungsabschnitt (32) entlang ihrer Erstreckung zwischen Bodenplatte (20) und Deckelpatte (24) einen Knick (44) oder eine Welle aufweist.

7. Sauggreifer (10) nach einem der vorherigen Ansprüche, wobei zumindest einige Wandungsabschnitte (32) schräg zu der Deckelplatte (24) und/oder schräg zu der Bodenplatte (20) und/oder geneigt zueinander verlaufen.

8. Sauggreifer (10) nach einem der vorherigen Ansprüche, wobei die Wandungsabschnitte (32) entlang der Flächennormale auf Deckelplatte (24) und/oder Bodenplatte (20) betrachtet, eine Wabenstruktur (50) bilden, wobei die Wabenstruktur (50) insbesondere eine Vielzahl von Waben (52) aufweist und sich die Querschnittsfläche der Wabe (52) entlang der Ausdehnung der Wabe (52) von Bodenplatte (20) zur Deckelplatte (24) vergrößert oder verringert.

9. Sauggreifer (10) nach einem der Ansprüche 1 - 7, wobei die Wandungsabschnitte (32) derart verlaufen, dass zumindest einige der Hohlräume (34) als Kanäle (54) ausgebildet sind, welche parallel zu der Bodenplatte (20) und/oder Deckelplatte (24) verlaufen.

10. Sauggreifer (10) nach einem der vorherigen Ansprüche, wobei die Wandungsabschnitte (32) derart verlaufen, dass zumindest einige der Hohlräume (34) paarweise gegeneinander abgedichtet sind.

11. Sauggreifer (10) nach einem der vorherigen Ansprüche, wobei jedem Verteilerraum (30) mehrere Saugstellen (16) zugeordnet sind und über diesen Verteilerraum (30) mit dem Unterdruckanschluss (18) verbunden sind.

12. Sauggreifer (10) nach einem der vorherigen Ansprüche, wobei die Deckelplatte (24) wenigstens einen Verteilerzugang (36) aufweist, welcher in einen Verteilerraum (30) oder in eine Gruppe von Verteilerräumen (30) einmündet.

13. Sauggreifer (10) nach einem der vorherigen Ansprüche, wobei der Profilkern (22) spiegelsymmetrisch bezüglich einer Mittelebene (48) zwischen Bodenplatte (20) und Deckelplatte (24) ausgebildet ist.

14. Sauggreifer (10) nach einem der vorherigen Ansprüche, wobei der Greifergrundkörper (12) einstückig ausgebildet ist, wobei vorzugsweise Deckelplatte (24), Profilkern (22) und Bodenplatte (20) aus demselben Material erzeugt sind.

15. Sauggreifer (10) nach einem der vorherigen Ansprüche, wobei eine Teilmenge der Hohlräume (34) mit einem von dem Material der Wandungsabschnitte (32) abweichenden, insbesondere porösen, Füllmaterial (56), vorzugsweise Schaumstoff, ausgefüllt sind.
